# FASCICULE DE BREVET EUROPEEN

(11) **EP 4 284 715 B1**
(45) Date de publication et mention de la délivrance du brevet: **01.01.2025**
(21) Numéro de dépôt: 22702689.5
(22) Date de dépôt: 27.01.2022
(51) Int. Cl.: B64C 1/14

(54) **PORTE D'AÉRONEF ÉQUIPÉE D'UN SYSTÈME DE RÉGLAGE EN POSITION ET PROCÉDÉ D'INSTALLATION D'UNE TELLE PORTE**
FLUGZEUGTÜR MIT EINEM SYSTEM ZUR POSITIONSEINSTELLUNG UND VERFAHREN ZUR INSTALLATION SOLCH EINER TÜR
AIRCRAFT DOOR EQUIPPED WITH A SYSTEM FOR ADJUSTMENT IN POSITION AND METHOD FOR INSTALLING SUCH A DOOR

(30) Priorité: 28.01.2021 FR 2100839
(43) Date de publication de la demande: 06.12.2023
(73) Titulaire: LATECOERE, 31500 Toulouse (FR)
(72) Inventeur: DUCASSE, Jean François, 32340 MIRADOUX (FR)
(74) Mandataire: Junca, Eric
(86) Numéro de dépôt international: PCT/EP2022/051947
(87) Numéro de publication internationale: WO 2022/162090

(56) Documents cités:
- EP-A1- 2 325 425
- FR-A1- 3 097 194
- FR-A1- 3 097 196

## Description

### DOMAINE TECHNIQUE

L'invention se rapporte à une porte d'aéronef, intégrant un système de réglage de positionnement dans son système d'accrochage, ainsi qu'un procédé d'installation de ladite porte.

Dans le domaine de l'accrochage de porte d'aéronef, une problématique constante est d'obtenir une surface extérieure du fuselage la plus continue possible, un réglage précis du positionnement de la porte est donc effectué en position fermée afin de l'ajuster par rapport à la peau du fuselage.

Classiquement, les portes d'aéronef sont constituées essentiellement d'un dormant, d'un ouvrant et d'un bras de support reliant le dormant à l'ouvrant. Le dormant désigne la partie fixe de la porte, formant l'encadrement de l'ouvrant et portant le système d'accrochage de l'ouvrant via le bras. En outre, l'ouvrant est mobile et comprend notamment une paroi qui obture le dormant de façon étanche en position de fermeture. Et le bras de support, articulé sur l'ouvrant et sur le dormant, permet d'obtenir une ouverture ou une fermeture de porte entre une position d'ouverture complète dans laquelle l'ouvrant est dégagé du dormant, et une position de fermeture de porte dans laquelle l'ouvrant obture le dormant.

En position de fermeture de porte, la paroi externe de l'ouvrant de la porte doit pouvoir suivre l'alignement de la peau du fuselage pour des motifs de performances aérodynamiques : lors de l'installation, un tel ajustement de la porte est recherché. Cet ajustement se fait par des systèmes de réglages précis suivant les différents axes orthogonaux du repère direct X, Y, Z de l'avion 1 (l'axe X étant l'axe longitudinal, traditionnellement orienté vers l'arrière de l'aéronef, l'axe Y l'axe transverse et l'axe Z étant l'axe vertical, conformément à la description détaillée ci-dessous). Pour chaque axe, des réglages en translation et/ou en rotation sont classiquement mis en oeuvre lors de l'installation de la porte.

### ÉTAT DE LA TECHNIQUE

Les moyens d'ajustement des portes d'aéronef de l'art antérieur sont généralement constitués par des fixations entre les principaux composants de la porte - dormant, ouvrant et bras de porte - qui permettent trois types de réglages : une translation suivant les deux sens de la direction définie par l'axe X de l'avion, une rotation autour d'un axe parallèle à l'axe X de l'avion et une rotation autour d'un axe parallèle à l'axe Y de l'avion.

Ces réglages sont classiquement effectués par l'ajout ou le retrait de cales d'épaisseurs ou à l'aide de cales striées, et ne permettent donc pas un réglage précis et continu lors de l'installation. De plus ces trois types de réglages sont localisés dans deux zones séparées : la zone de liaison bras de porte/ouvrant, et la zone de liaison bras de porte/dormant. Ces manipulations requièrent une durée d'intervention importante et la présence de plusieurs opérateurs est recommandée. Cette intervention se fait en effet sur des zones différentes de la porte et, l'ajustement s'effectuant selon un processus itératif, chaque réglage influence les autres réglages.

Des fixations permettant un ajustement du réglage de porte plus rapide et plus précis ont été développées afin de répondre aux limitations des moyens d'ajustement généraux, concernant le nombre de zones et la précision des réglages. Or ces fixations génèrent un encombrement important et requièrent une installation sur un dormant de structure étendue, ce qui limite leur possibilité d'adaptation dans les cabines d'aéronef. De plus, pour les portes situées près du cockpit de l'aéronef, la plus forte courbure du fuselage oblige à déporter l'une des attaches vers l'intérieur de la cabine afin de maintenir les attaches alignées verticalement. Un réglage d'une porte d'aéronef est divulgué dans le document FR 3 097 194 A1.

### EXPOSE DE L'INVENTION

L'invention a pour but d'améliorer les portes d'aéronef de l'art antérieur en ce qui concerne leurs capacités d'ajustement lors de leur installation à l'aide d'un système de réglage compact, aisément intégrable et procurant un ajustement précis par rapport à la peau du fuselage. En particulier en cas de courbure importante du fuselage, un faible encombrement des fixations est recherché afin de minimiser les déports entre ces fixations et l'encadrement de porte.

Pour ce faire, l'invention prévoit d'intégrer des réglages en translation et en rotation au niveau de l'interface entre le bras de porte et le dormant par l'intermédiaire d'un unique couple d'attaches, chaque attache permettant des réglages indépendants en translation en X et en Y dans un même plan. Un tel ensemble forme alors un système compact de façon à faciliter son installation sur les structures de fuselage. De plus les attaches sont agencées de sorte que, lorsque les réglages se font sur les deux attaches dans le même sens et selon une même amplitude en X, respectivement en Y, il en résulte un mouvement global de translation simple de l'ouvrant en X, respectivement en Y. Et lorsque les réglages en X, respectivement en Y, se font sur les deux attaches dans des sens opposés et selon une même amplitude, un mouvement global de rotation simple est obtenu, l'axe de rotation étant parallèle à l'axe Y, respectivement à l'axe X, et passant par le point médian entre les attaches. Tout autre ensemble de réglages produit un mouvement global se décomposant en la combinaison d'une translation simple et d'une rotation simple. Ces réglages en translation et en rotation peuvent être combinés successivement et de manière itérative afin d'amener la porte dans la position voulue.

A cet effet, la présente invention a pour objet une porte d'aéronef pouvant être montée dans un fuselage de repère X, Y, Z et comportant un dormant formant un encadrement pouvant être solidarisé au fuselage, un ouvrant ainsi qu'un bras support. Ce bras support relie l'ouvrant au dormant par un système d'accrochage qui permet d'installer et de régler l'ouvrant de la porte en position par rapport au fuselage. Ce système d'accrochage est composé d'un couple d'attaches comportant chacune un pivot de rotation autour d'un axe commun parallèle à l'axe Z Chaque attache comporte également deux pièces principales : un support fixe - dénommé ci-après embase - positionné sur le dormant, et une ferrure - dénommée ci-après chariot - mobile sur cette embase selon l'axe Y. L'embase et le chariot de chaque attache forment deux liaisons d'ajustement de réglage, chacune de ces liaisons étant en translation continue selon des directions parallèles aux axes X et Y de l'aéronef, lesdites liaisons d'ajustement de réglage en translation formant des axes de réglage, les directions formant les axes de réglage étant sécantes dans un plan parallèle au plan XY pour chacune des attaches. Les réglages en X de l'ouvrant de la porte, respectivement les réglages en Y, sont réalisés en translation simple lorsqu'ils sont effectués sur les attaches dans le même sens et selon une même amplitude en X, respectivement en Y, et/ou sont réalisés en rotation simple autour d'un axe parallèle à l'axe Y de l'aéronef, respectivement d'un axe parallèle à l'axe X de l'aéronef, lorsqu'ils sont effectués dans des sens opposés et selon une même amplitude en X, respectivement en Y.

Une telle configuration positionne l'ensemble des liaisons de réglage d'ajustement en X et en Y dans une zone réduite, ce qui permet le montage du système d'accrochage sur une structure usuelle de dormant sans augmenter sensiblement la hauteur des cadres pour loger les attaches dans l'encadrement de porte. Un autre avantage de ce système d'accrochage est la facilité d'accès aux réglages due à leur rapprochement et le gain de temps qui en découle.

Dans un mode de réalisation préféré, le chariot de chaque attache comporte un châssis composé de deux corps cylindriques formant un « T » présentant :
- un cylindre plein déterminant une barre verticale du « T » orientée selon une direction parallèle à l'axe Y de l'aéronef, et qui réalise, en collaboration avec l'embase, la liaison d'ajustement de réglage de l'ouvrant en translation selon cet axe Y, et
- un cylindre creux déterminant une barre horizontale du « T » orientée selon une direction parallèle l'axe X de l'aéronef, et qui réalise, en collaboration avec la broche du bras de porte, la liaison d'ajustement de réglage de l'ouvrant en translation selon cet axe X.

Chacun de ces réglages aboutit à un ajustement à la fois rapide, précis et continu, contrairement aux solutions de l'art antérieur, en particulier les solutions qui utilisent des cales.

Selon des modes de réalisation avantageux, les axes de réglage sont orientés de la façon suivante :
- dans la direction de l'axe X de l'aéronef, les axes de réglage des attaches sont orientés dans le même sens et se trouvent hors de l'encadrement de porte ;
- dans la direction de l'axe Y de l'aéronef, les axes de réglage sont orientés dans des sens contraires, l'axe d'une attache supérieure étant orienté vers l'intérieur de la cabine et celui d'une l'attache inférieure vers l'extérieur de la cabine, l'attache dite supérieure possédant une position située au-dessus de l'attache dite inférieure selon leurs coordonnées en Z ; et
- chaque attache présente également un mécanisme de blocage de rotation autour de l'axe Y agencé entre le chariot et l'embase, en particulier sous la forme d'une liaison glissière de guidage orientée dans la direction de l'axe Y. Avantageusement, la liaison glissière présente une section oblongue à côtés longitudinaux rectilignes et parallèles, la liaison glissière traversant des alésages formés dans des extensions du chariot et de l'embase.

Il est à noter que, les réglages étant réalisés par des translations, l'ajustement en rotation autour de l'axe Y de l'ouvrant n'est pas empêché par ce mécanisme de blocage.

Dans un mode de réalisation préféré, les liaisons d'ajustement de réglage sont réalisées par des liaisons vis-écrou dans lesquelles, pour le réglage dans l'axe X de l'avion, la vis est constituée par un manchon fileté et l'écrou est formé par le cylindre creux appartenant au châssis du chariot, et pour le réglage dans l'axe Y de l'avion, la vis est constituée par un manchon fileté et l'écrou est formé par la bague taraudée fixée de façon solidaire à l'embase.

Les liaisons vis-écrou transforment un mouvement de rotation en translation par l'intermédiaire des filetages et des taraudages selon les axes de réglage. Avantageusement, pour des raisons de tenue mécanique, chaque liaison vis-écrou n'est présente que sur une longueur limitée.

L'invention se rapporte également à un aéronef comportant au moins une porte équipée d'un système d'accrochage de porte tel que défini ci-dessus.

L'invention vise également un procédé d'installation de porte d'aéronef équipée d'un système d'accrochage tel que défini ci-dessus et comportant les phases suivantes :
une première phase de mise en place consistant globalement à :
   - assembler le bras de porte à l'ouvrant,
   - assembler chaque attache du système d'accrochage au dormant et au bras de porte,
   - positionner l'ouvrant en configuration de fermeture dans le dormant ;
et une phase d'ajustement du réglage de la porte en position fermée afin de positionner l'ouvrant dans l'alignement du fuselage, et dans le but de l'ajuster dans le dormant en obturant le fuselage de façon étanche, selon au moins une des étapes suivantes, prise isolément ou en combinaison :
   - pour effectuer une translation de la porte suivant la direction de l'axe X aéronef : déplacer, au niveau des attaches supérieure et inférieure, les manchons filetés de réglage orientés suivant la direction X aéronef d'une amplitude identique et dans le même sens ;
   - pour effectuer une translation de la porte suivant la direction de l'axe Y aéronef : déplacer, au niveau des attaches supérieure et inférieure, les manchons filetés de réglage orientés suivant la direction Y aéronef d'une amplitude identique et dans le même sens ;
   - pour effectuer une rotation de la porte autour d'un axe parallèle à la direction de l'axe X aéronef : déplacer, au niveau des attaches supérieure et inférieure, les manchons filetés de réglage orientés suivant la direction Y aéronef d'une amplitude identique et dans des sens contraires, et
   - pour effectuer une rotation de la porte autour d'un axe parallèle à la direction de l'axe Y aéronef : déplacer, au niveau des attaches supérieure et inférieure, les manchons filetés de réglage orientés suivant la direction X aéronef d'une amplitude identique et dans des sens contraires.

### PRESENTATION DES FIGURES

D'autres données, caractéristiques et avantages de la présente invention apparaîtront à la lecture de la description non limitée qui suit, en référence aux figures annexées qui représentent, respectivement :
- la figure 1, une vue en perspective d'un avion comprenant son repère traditionnel d'axes de référence aéronef X, Y et Z ;
- la figure 2, une vue de face d'une porte d'avion comportant un dormant, un ouvrant et un bras de porte de liaison ;
- la figure 3, une vue en perspective partielle de la porte selon la figure 2, avec des attaches supérieure et inférieure selon un exemple de réalisation ;
- la figure 4a, la figure 4b et la figure 5, des vues en coupe respectivement selon les plans XZ, YZ et XY de l'attache inférieure ;
- la figure 6a, la figure 6b et la figure 7, des vues en coupe respectivement selon les plans XZ, YZ et XY de l'attache supérieure, et
- la figure 8, une vue en perspective partielle de la porte selon la figure 2 avec le positionnement d'un outillage pour effectuer l'ajustement de la porte selon l'invention.

### DESCRIPTION DETAILLEE

Dans le présent texte, les qualificatifs « supérieur » et « inférieur » d'éléments d'un avion se rapportent aux positions relatives de ces éléments lorsque l'avion est situé au sol.

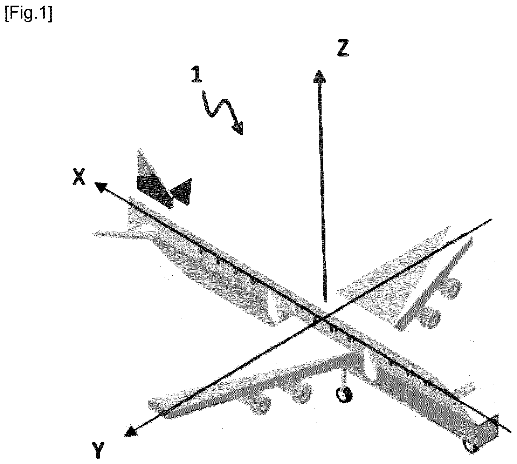

En référence à la vue globale de la figure 1, un avion 1 est représenté en perspective ainsi que ses différents axes selon un repère orthogonal XYZ : l'axe X correspond à l'axe longitudinal de l'aéronef, orienté traditionnellement de l'avant vers l'arrière de l'avion ; l'axe Z est l'axe vertical orienté vers le haut de l'avion et l'axe Y est l'axe transverse, orienté de telle sorte que le repère formé par les axes X, Y et Z soit un repère direct.

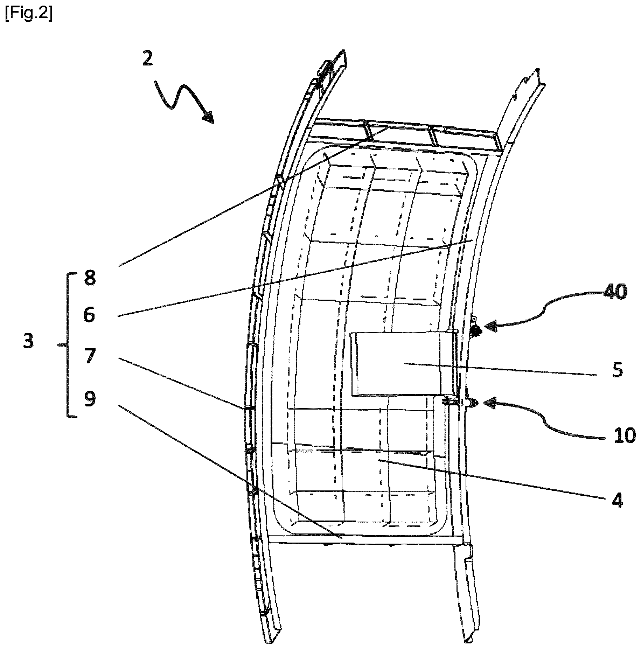

Une vue de l'ensemble de la porte 2 est représentée en figure 2 dans laquelle le dormant 3 constitue un encadrement de porte solidarisé au fuselage de l'avion (non représenté). Ce dormant 3 est composé par une portion des cadres verticaux avant 6 et arrière 7, ainsi que par deux traverses, une traverse supérieure 8 et une traverse inférieure 9. En aéronautique, les cadres sont des pièces de structure de type annulaire qui donnent sa forme au fuselage. L'ouvrant 4 est formé d'une porte mobile qui, en position de fermeture, vient obturer le dormant et, en position d'ouverture, ouvre le passage. Le bras de porte 5 lie le dormant à l'ouvrant. Selon l'invention, le bras 5 est notamment relié au dormant 3 par l'intermédiaire de deux attaches, une attache dite supérieure 40 agencée au-dessus d'une attache dite inférieure 10.

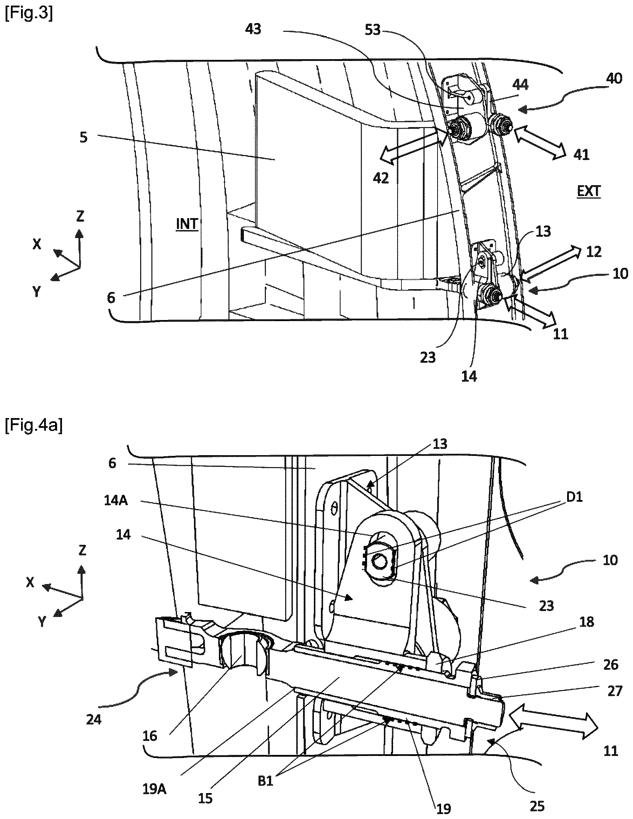

La figure 3 montre plus précisément les attaches supérieure 40 et inférieure 10 reliant le bras de porte 5 au dormant 3. Ces deux attaches 10, 40 sont fixées, dans cet exemple d'exécution, sur le cadre vertical avant 6. Chacune des attaches, 10 et 40, définit respectivement un réglage dans les deux sens (doubles flèches 11, 41) parallèlement à l'axe X et un réglage dans les deux sens (doubles flèches 12, 42) parallèlement à l'axe Y.

La figure 3 fait également apparaître l'orientation des liaisons de réglage : selon l'axe X, les manchons filetés de réglage 19, 49 des deux attaches 10, 40 sont agencées à partir d'un même côté par rapport au cadre vertical 6, et sont donc orientées dans le même sens. Dans le cadre de cet exemple de réalisation, les manchons filetés de réglage 20, 50 des attaches 10, 40 selon l'axe Y sont agencées et orientées dans des sens opposés : le réglage de l'attache supérieure 40 selon l'axe Y s'effectue vers l'intérieur de cabine INT de l'avion et celui de l'attache inférieure 10 s'effectue vers l'extérieur de cabine EXT. Dans un autre exemple de réalisation, et dans la mesure où la structure du dormant 3 (cf. figure 2) est suffisamment étendue, le réglage de l'attache inférieure 10 selon l'axe Y peut s'effectuer vers l'intérieur de cabine INT.

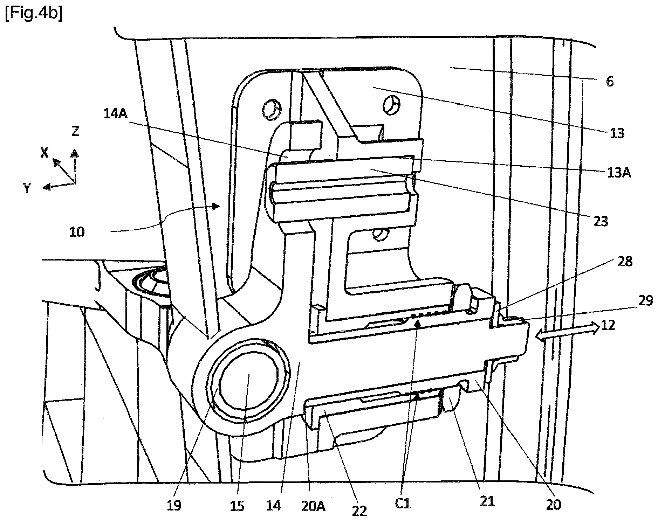

La figure 4a et la figure 4b illustrent des vues en coupe partielle de l'attache inférieure 10 respectivement selon le plan XZ et le plan YZ. Cette attache inférieure 10 comporte deux pièces principales, reliées par la liaison vis-écrou C1 et par la liaison glissière D1 selon l'axe Y par l'intermédiaire de l'axe guide 23, à savoir : une embase 13 accrochée au cadre vertical avant 6 et un chariot 14.

L'axe guide 23 est solidarisé dans un alésage 13A détouré dans une extension de l'embase 13 et agencé dans un alésage 14A détouré dans une extension supérieure du chariot 14. Dans ces conditions cette liaison glissière D1 se situe, dans cet exemple de réalisation, au-dessus et parallèlement à la liaison vis-écrou C1 permettant le réglage en translation dans les deux sens (double flèche 12) selon l'axe Y de l'attache inférieure 10 (cf. figure 4b), comme détaillé ci-dessous.

Cet axe guide 23 solidarisé avec l'embase 13 par l'intermédiaire de l'alésage 13A de forme complémentaire présent dans ladite embase présente une portion de forme oblongue ayant 2 méplats verticaux symétriquement opposés qui servent de surfaces guides en translation pour le chariot 14 par l'intermédiaire de l'alésage 14A de section oblongue complémentaire présent dans ledit chariot 14. Ainsi, ladite liaison glissière D1 bloque la rotation du chariot 14 autour de l'axe Y.

La vue en coupe de la figure 4a montre en particulier une broche de bras de porte 15 réalisant la liaison entre le bras de porte 5 et l'attache inférieure 10. A l'une de ses extrémités 24 se trouve une liaison pivot 16 autorisant la rotation du bras de porte 5 autour d'un axe sensiblement parallèle à l'axe Z.

A l'autre extrémité 25 de cette broche de bras de porte 15 se trouve la liaison vis-écrou B1 de mise en oeuvre du réglage précis selon l'axe X par l'intermédiaire d'un manchon fileté 19 dans lequel est encastrée la broche de bras de porte 15. Une rondelle 26 et un écrou de serrage 27 maintiennent la broche de bras de porte 15 dans le manchon fileté 19 qui lui-même est maintenu par la liaison vis-écrou B1 dans le chariot 14 de l'attache inférieure 10. Un contre-écrou 18 bloque la position souhaitée de réglage en translation selon l'axe X de l'attache inférieure 10.

La vue en coupe de la figure 4b illustre les liaisons entre l'embase 13 et le chariot 14 et en particulier la liaison vis-écrou C1 permettant de mettre en oeuvre le réglage précis selon l'axe Y. Dans l'embase 13 est encastrée et immobilisée une bague taraudée 22, et le chariot 14 est lui-même encastré dans un manchon fileté 20 : la bague taraudée 22 représente l'écrou et le manchon fileté 20 la vis de la liaison vis-écrou C1. Une rondelle 28 et un écrou de serrage 29 maintiennent le chariot 14 dans le manchon fileté 20. La liaison vis-écrou C1 maintient le manchon fileté 20 dans la bague taraudée 22 encastrée et immobilisée dans l'embase 13 de l'attache inférieure 10. Un contre-écrou 21 bloque la position souhaitée de réglage en translation selon l'axe Y de l'attache inférieure 10.

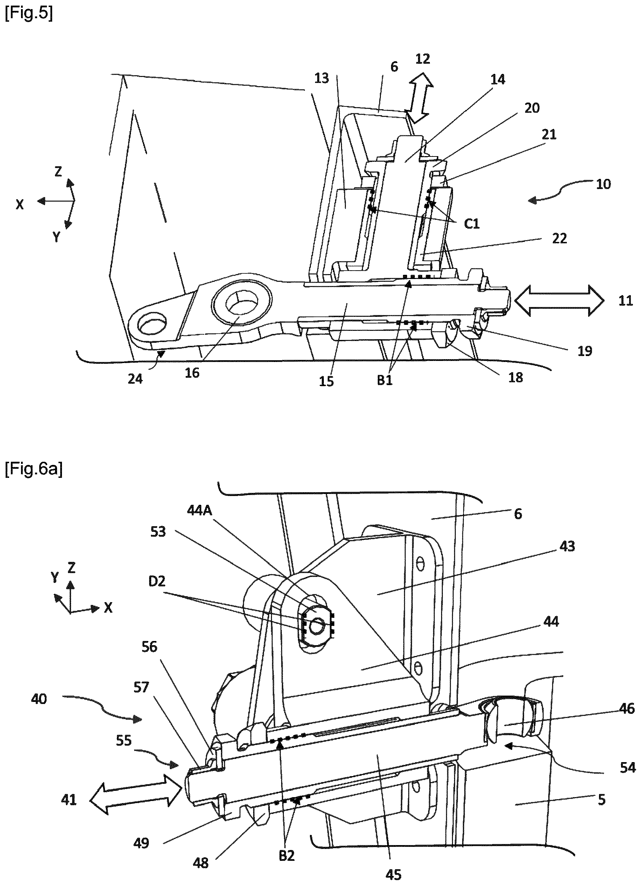

Sur la vue en coupe partielle de la figure 5, sont représentés l'attache inférieure 10 selon le plan XY, le cadre 6 de l'encadrement de porte ainsi que des pièces constitutives de l'attache inférieure 10 : l'embase 13 et le chariot 14.

Le chariot 14 présente en partie inférieure un châssis formant un « T » composé de deux corps cylindriques, celui constituant la barre horizontale du « T » étant creux, partiellement taraudé et aligné avec l'axe X, et celui constituant la barre verticale du « T » étant plein et aligné avec l'axe Y.

La broche de bras de porte 15 et son manchon fileté 19 sont insérés dans cette barre horizontale du « T » du châssis du chariot 14. Ainsi, le réglage ajusté en translation selon l'axe X (double flèche 11) de l'attache inférieure 10 est localisé dans la barre horizontale du « T » et correspond à la liaison vis-écrou B1, dans laquelle le manchon fileté 19 correspond à la vis et le cylindre creux partiellement taraudé du châssis du chariot 14 correspond à l'écrou.

La barre verticale du « T » du châssis du chariot 14 est insérée dans le manchon fileté 20 en liaison vis-écrou C1 avec la bague taraudée 22 encastrée solidairement dans l'embase 13. Cette liaison vis-écrou C1 localise le réglage ajusté en translation selon l'axe Y (double flèche 12) de l'attache inférieure 10 dans la barre verticale du « T ».

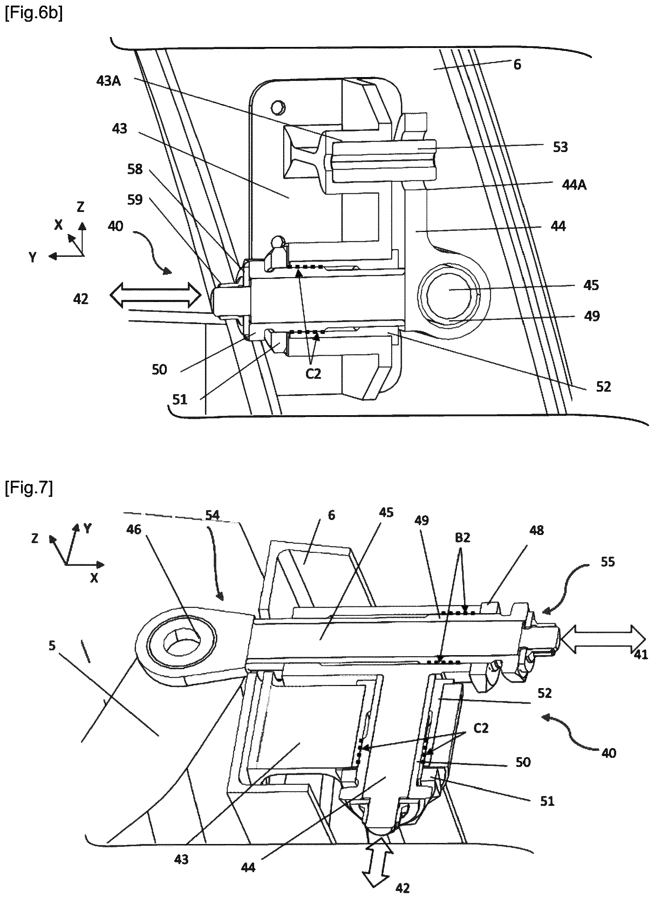

Les figures 6a et 6b illustrent des vues en coupe partielle de l'attache supérieure 40 respectivement selon le plan XZ et le plan YZ. Cette attache supérieure 40 comporte deux pièces principales, reliées par la liaison vis-écrou C2 et par la liaison glissière D2 selon l'axe Y par l'intermédiaire de l'axe guide 53, à savoir : une embase 43 accrochée au cadre vertical avant 6 et un chariot 44.

L'axe guide 53 est solidarisé dans un alésage 43A détouré dans une extension de l'embase 43 et agencé dans un alésage 44A détouré dans une extension supérieure du chariot 44. Dans ces conditions cette liaison glissière D2 se situe, dans cet exemple de réalisation, au-dessus et parallèlement à la liaison vis-écrou C2, permettant le réglage en translation dans les deux sens (double flèche 42) selon l'axe Y de l'attache supérieure 40 (cf. figure 6b), comme détaillé ci-dessous.

Cet axe guide 53, à l'image de l'axe guide 23, solidarisé avec l'embase 43 par l'intermédiaire de l'alésage 43A de forme complémentaire présent dans ladite embase présente une portion de forme oblongue ayant 2 méplats verticaux symétriquement opposés qui servent de surfaces guide en translation pour le chariot 44 par l'intermédiaire de l'alésage 44A de section oblongue complémentaire présent dans ledit chariot 44. Ainsi, ladite liaison glissière D2 bloque la rotation du chariot 44 autour de l'axe Y.

La vue en coupe de la figure 6a montre en particulier une broche de bras de porte 45 réalisant la liaison entre le bras de porte 5 et l'attache supérieure 40. A l'une de ses extrémités 54 se trouve une liaison pivot 46 autorisant la rotation du bras de porte 5 autour d'un axe sensiblement parallèle à l'axe Z.

A l'autre extrémité 55 de cette broche de bras de porte 45 se trouve la liaison vis-écrou B2 de mise en oeuvre du réglage précis selon l'axe X par l'intermédiaire d'un manchon fileté 49 dans lequel est encastrée la broche de bras de porte 45. Une rondelle 56 et un écrou de serrage 57 maintiennent la broche de bras de porte 45 dans le manchon fileté 49 qui lui-même est maintenu par la liaison vis-écrou B2 dans le chariot 44 de l'attache supérieure 40. Un contre-écrou 48 bloque la position souhaitée de réglage en translation selon l'axe X de l'attache supérieure 40.

La vue en coupe de la figure 6b illustre les liaisons entre l'embase 43 et le chariot 44 et en particulier la liaison vis-écrou C2 permettant de mettre en oeuvre le réglage précis selon l'axe Y. Dans l'embase 43 est encastrée et immobilisée une bague taraudée 52, et le chariot 44 est lui-même encastré dans un manchon fileté 50 : la bague taraudée 52 représente l'écrou et le manchon fileté 50 la vis de la liaison vis-écrou C2. Une rondelle 58 et un écrou de serrage 59 maintiennent le chariot 44 dans le manchon fileté 50. La liaison vis-écrou C2 maintient le manchon fileté 50 dans la bague taraudée 52 encastrée et immobilisée dans l'embase 43 de l'attache supérieure 40. Un contre-écrou 51 bloque la position souhaitée de réglage en translation selon l'axe Y de l'attache supérieure 40.

Sur la vue en coupe partielle de la figure 7, sont représentés l'attache supérieure 40 selon le plan XY, le cadre 6 de l'encadrement de porte ainsi que des pièces constitutives de l'attache supérieure 40 : l'embase 43 et le chariot 44.

Le chariot 44 présente en partie inférieure un châssis formant un « T » composé de deux corps cylindriques, celui constituant la barre horizontale du « T » étant creux, partiellement taraudé et aligné avec l'axe X, et celui constituant la barre verticale du « T » étant plein et aligné avec l'axe Y.

La broche de bras de porte 45 et son manchon fileté 49 sont insérés dans cette barre horizontale du « T » du châssis du chariot 44. Ainsi, le réglage ajusté en translation selon l'axe X (double flèche 41) de l'attache supérieure 40 est localisé dans la barre horizontale du « T » et correspond à la liaison vis-écrou B2, dans laquelle le manchon fileté 49 correspond à la vis et le cylindre creux partiellement taraudé du châssis du chariot 44 correspond à l'écrou.

La barre verticale du « T » du châssis du chariot 44 est insérée dans le manchon fileté 50 en liaison vis-écrou C2 avec la bague taraudée 52 encastrée solidairement dans l'embase 43. Cette liaison vis-écrou C2 localise le réglage ajusté en translation selon l'axe Y (double flèche 42) de l'attache supérieure 40 dans la barre verticale du « T ».

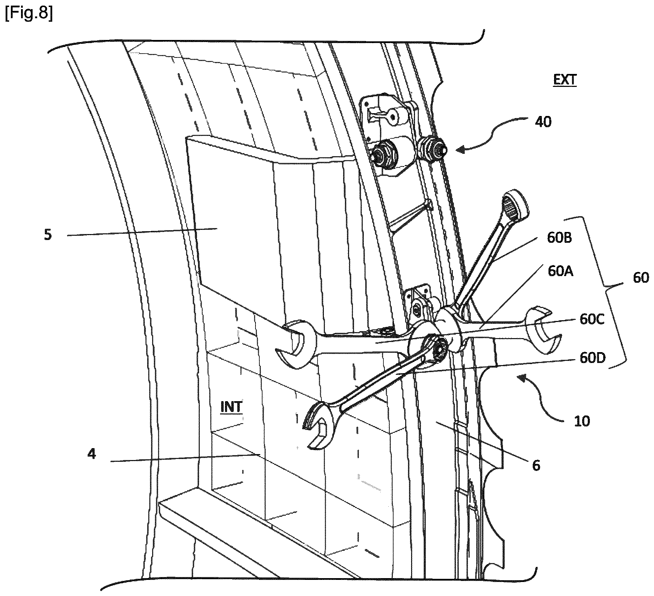

La figure 8 montre le positionnement des outils 60 afin d'agir sur les systèmes vis-écrou et de procéder aux réglages d'ajustement lors de l'installation de la porte. Seuls les outils de l'attache inférieure 10 sont représentés.

Durant ces opérations de réglage, une première clé 60A, 60C maintient le contre-écrou 21, 18 en position débloquée. Le chariot 14, respectivement la broche de bras de porte 15, est plaquée axialement contre une face d'appui plane 20A du manchon fileté 20, respectivement 19A du manchon fileté 19, sous l'effet de l'effort axial généré par le couple de serrage appliqué sur l'écrou de serrage 29, respectivement l'écrou de serrage 27.

Le manchon fileté 20, respectivement le manchon fileté 19, se trouve compressé entre le chariot 14, respectivement la broche de bras de porte 15, et la rondelle d'appui 28, respectivement la rondelle d'appui 26, ce qui a pour effet de freiner jusqu'à bloquer sa rotation nécessaire pour effectuer le réglage.

Ainsi, préalablement à la suite des opérations de réglage, l'écrou de serrage 29, respectivement l'écrou de serrage 27, est desserré jusqu'à ce que la contrainte de compression exercée sur le manchon fileté 20, respectivement le manchon fileté 19, soit libérée, c'est-à-dire jusqu'à l'apparition d'un jeu, au niveau de l'une des extrémités planes du manchon fileté 20, respectivement du manchon fileté 19, servant de face d'appui soit pour la rondelle d'appui 28, respectivement la rondelle d'appui 26, soit pour le chariot 14 respectivement la broche de bras de porte 15.

Ensuite la seconde clé 60B, 60D applique un couple sur le manchon fileté 20, 19 faisant office de vis.

De façon similaire pour l'attache supérieure 40, une première clé maintient le contre-écrou 51, 48 en position débloquée pendant qu'une seconde clé applique un couple sur le manchon fileté 50, 49 faisant office de vis.

La rotation de la vis à travers le filetage transforme ce mouvement de rotation en un mouvement de translation de cette vis selon sa direction. Lorsque le réglage souhaité est réalisé, la première clé applique un couple de serrage sur le contre-écrou correspondant 21, 18, 51, 48 afin de bloquer cette position de réglage. A l'issue de l'ensemble de ces réglages un couple de serrage est appliqué aux écrous de serrage 27, 29, 57, 59 afin de figer la position de la porte suivant les axes X et Y de l'avion.

Dans cet exemple de réalisation, les liaisons vis-écrous des réglages en X (doubles flèches 11, 41) sont positionnés à l'avant de l'encadrement, la liaison vis-écrou de réglage en Y (double flèche 12) de l'attache inférieure 10 est orienté vers l'extérieur EXT de cabine, et la liaison vis-écrou de réglage en Y (double flèche 42) de l'attache supérieure 40 est orientée vers l'intérieur INT de cabine.

Appliquer aux deux liaisons vis-écrous un réglage de même valeur angulaire et dans la même sens selon l'axe X, respectivement selon l'axe Y, entraine un réglage en translation selon l'axe X, respectivement selon l'axe Y, de la porte 2 (cf. figure 2).

Appliquer aux deux liaisons vis-écrous un réglage de même valeur angulaire et dans des sens opposés selon l'axe Y, respectivement selon l'axe X, entraine un réglage en rotation autour d'un axe parallèle à l'axe X, respectivement autour d'un axe parallèle à l'axe Y, de la porte 2 (cf. figure 2). Dans ces conditions, la rotation de la porte autour d'un axe parallèle à l'axe X s'effectue autour d'un axe situé à équidistance des deux axes de réglage Y des deux attaches et parallèle à l'axe X de l'avion. De manière équivalente, la rotation de la porte autour d'un axe parallèle à l'axe Y s'effectue autour d'un axe situé à équidistance des deux axes de réglage X des deux attaches et parallèle à l'axe Y de l'avion.

L'invention n'est pas limitée aux exemples décrits et représentés. Il est par exemple possible d'obtenir le mouvement de translation de réglage par un mécanisme autre qu'un système vis-écrou, tel qu'un micro-piston ou un micromoteur électrique à entrainement continu. Par ailleurs, l'orientation des réglages X et Y peut s'adapter en fonction de la configuration du fuselage de l'aéronef et les réglages peuvent être réalisés dans toutes les orientations des axes de réglage.

## Revendications

1. Porte d'aéronef (2) pouvant être montée dans un fuselage de repère X, Y, Z et comportant un dormant (3) formant un encadrement pouvant être solidarisé au fuselage, un ouvrant (4) ainsi qu'un bras de porte (5), ce bras de porte reliant l'ouvrant au dormant par un système d'accrochage permettant d'installer et de régler l'ouvrant (4) de la porte en position par rapport au fuselage, ce système étant composé d'un couple d'attaches (10, 40) comportant chacune un pivot de rotation (16, 46) autour d'un axe commun parallèle à l'axe Z, une embase (13, 43) fixée sur le dormant (3), et un chariot (14, 44) mobile sur cette embase (13, 43) selon l'axe Y, l'embase et le chariot de chaque attache formant deux liaisons d'ajustement de réglage en translation selon des directions parallèles aux axes X et Y afin d'ajuster les réglages de la porte, lesdites liaisons d'ajustement de réglage en translation formant des axes de réglage, cette porte d'aéronef (2) étant **caractérisée en ce que**, pour chacune des attaches (10,40), les directions formant les axes de réglage (11, 12, 41, 42) sont sécantes dans un plan parallèle au plan XY.

2. Porte d'aéronef selon la revendication 1, dans laquelle le chariot (14, 44) de chaque attache est muni d'un châssis composé de deux corps cylindriques formant un « T » présentant :
- un cylindre plein déterminant une barre verticale du « T » orientée selon une direction parallèle à l'axe Y de l'aéronef (1) et qui réalise, en collaboration avec l'embase (13, 43), la liaison d'ajustement de réglage de l'ouvrant (4) en translation selon cet axe Y, et
- un cylindre creux déterminant une barre horizontale du « T » orientée selon une direction parallèle à l'axe X de l'aéronef (1) et qui réalise, en collaboration avec une broche du bras de porte (15, 45) la liaison d'ajustement de réglage de l'ouvrant (4) en translation selon cet axe X.

3. Porte d'aéronef selon l'une quelconque des revendications 1 à 2, **caractérisée en ce que** les axes de réglages (11, 12, 41, 42) sont orientés de la façon suivante :
- dans la direction de l'axe X de l'aéronef (1), les réglages des attaches sont orientés dans le même sens et se trouvent hors de l'encadrement de porte ; et
- dans la direction de l'axe Y de l'aéronef (1), les axes de réglages sont orientés dans des sens contraires, l'axe d'une attache supérieure étant orienté vers l'intérieur de la cabine et celui d'une attache inférieure vers l'extérieur de la cabine, l'attache dite supérieure possédant une position située au-dessus de l'attache dite inférieure selon leurs coordonnées en Z.

4. Porte d'aéronef selon l'une quelconque des revendications 1 à 3, **caractérisée en ce que** les attaches (10, 40) présentent un mécanisme pour bloquer leur rotation autour de l'axe Y agencé entre le chariot (14, 44) et l'embase (13, 43), sous forme d'une liaison glissière de guidage (D1, D2) orientée dans la direction de l'axe Y.

5. Porte d'aéronef selon la revendication 4, **caractérisée en ce que** la liaison glissière de guidage (D1, D2) présente une section oblongue à côtés longitudinaux rectilignes et parallèles, et traverse des alésages (13A, 14A, 43A, 44A) de l'embase (13, 43) et du chariot (14, 44).

6. Porte d'aéronef selon l'une quelconque des revendications 1 à 5, **caractérisée en ce que** les liaisons d'ajustement de réglage sont réalisées par des liaisons vis-écrou (B1, C1, B2, C2).

7. Porte d'aéronef selon la revendication 6 en combinaison avec la revendication 2, **caractérisée en ce que** pour les liaisons d'ajustement de réglage dans l'axe X de l'aéronef (B1, B2), la vis est constituée par un manchon fileté (19, 49) et l'écrou est formé par le cylindre creux appartenant au châssis du chariot (14, 44), et pour les liaisons d'ajustement de réglage dans l'axe Y de l'aéronef (C1, C2), la vis est constituée par un manchon fileté (20, 50) et l'écrou est formé par une bague taraudée (22, 52) fixée de façon solidaire à l'embase (13, 43).

8. Porte d'aéronef selon la revendication 7, **caractérisée en ce que** les liaisons vis-écrou (B1, C1, B2, C2) ne sont présents que sur une longueur limitée de chaque axe d'ajustement de réglage.

9. Aéronef (1) comportant au moins une porte selon l'une des revendications 1 à 8.

10. Procédé d'installation de porte d'aéronef selon l'une des revendications 1 à 8 en combinaison avec les revendications 3 et 7 prises simultanément comportant une phase préalable de mise en place de porte consistant globalement à :
- assembler le bras de porte (5) à l'ouvrant (4) ;
- assembler chaque attache (10, 40) du système d'accrochage au dormant (3) et au bras de porte (5) ;
- positionner l'ouvrant (4) en configuration de fermeture dans le dormant (3) ;
ce procédé étant **caractérisé en ce qu'**il comporte une phase d'ajustement de réglage de la porte en position fermée qui fait suite à la phase préalable selon au moins une des étapes suivantes :
- pour effectuer une translation de la porte suivant la direction de l'axe X de l'aéronef (1) : déplacer, au niveau des attaches supérieure (40) et inférieure (10), les manchons filetés (19, 49) de réglages orientés suivant la direction X de l'aéronef (1) d'une amplitude identique et dans le même sens ;
- pour effectuer une translation de la porte suivant la direction de l'axe Y de l'aéronef (1) : déplacer, au niveau des attaches supérieure et inférieure, les manchons filetés (20, 50) de réglages orientés suivant la direction Y de l'aéronef (1) d'une amplitude identique et dans le même sens ;
- pour effectuer une rotation de la porte autour d'un axe parallèle à la direction de l'axe X de l'aéronef (1) : déplacer, au niveau des attaches supérieure et inférieure, les manchons filetés (20, 50) de réglages orientés suivant la direction Y de l'aéronef (1) d'une amplitude identique et dans des sens contraires, et
- pour effectuer une rotation de la porte autour d'un axe parallèle à la direction de l'axe Y de l'aéronef (1) : déplacer, au niveau des attaches supérieure et inférieure, les manchons filetés (19, 49) de réglages orientés suivant la direction X de l'aéronef (1) d'une amplitude identique et dans des sens contraires.

11. Procédé d'installation de porte d'aéronef selon la revendication 10, dans lequel une première clé (60A, 60C) maintient un contre-écrou (18, 21, 48, 51) en position débloquée pendant qu'une seconde clé (60B, 60D) applique un couple sur le manchon fileté (19,20, 49, 50).

12. Procédé d'installation de porte d'aéronef selon l'une quelconque des revendications 10 ou 11, dans lequel à l'issue de l'ensemble des étapes de réglages, un couple de serrage est appliqué à des écrous de serrage (27, 29, 57, 59) suivant les axes X et Y de l'aéronef (1).

## Patentansprüche

1. Luftfahrzeugtür (2), die in einen Rumpf mit einem Bezugssystem X, Y, Z montiert werden kann und einen Rahmen (3), der eine Einrahmung bildet, der mit dem Rumpf fest verbunden werden kann, einen Flügel (4) sowie einen Türarm (5) beinhaltet, wobei dieser Türarm den Flügel durch ein Aufhängungssystem mit dem Rahmen verbindet, das es ermöglicht, den Flügel (4) der Tür zu installieren und bezogen auf den Rumpf in der Position einzustellen, wobei dieses System aus einem Paar Befestigungselemente (10, 40) zusammengesetzt ist, die jeweils einen Drehpunkt (16, 46) um eine gemeinsame Achse parallel zur Z-Achse, einen Sockel (13, 43), der am Rahmen (3) befestigt ist, und einen Schlitten (14, 44), der entlang der Y-Achse auf diesem Sockel (13, 43) beweglich ist, beinhalten, wobei der Sockel und der Schlitten jedes Befestigungselements zwei Justierverbindungen zur Translationseinstellung in Richtungen parallel zur X- und Y-Achse bilden, um die Einstellungen der Tür zu justieren, wobei die Justierverbindungen zur Translationseinstellung Einstellungsachsen bilden, wobei diese Luftfahrzeugtür (2) **dadurch gekennzeichnet ist, dass** sich für jedes der Befestigungselemente (10, 40) die Richtungen, die die Einstellungsachsen (11, 12, 41, 42) bilden, in einer Ebene parallel zur XY-Ebene schneiden.

2. Luftfahrzeugtür nach Anspruch 1, wobei der Schlitten (14, 44) jedes Befestigungselements mit einem Grundträger versehen ist, der aus zwei zylinderförmigen Körpern zusammengesetzt ist, die ein "T" bilden, die Folgendes aufweisen:
- einen Vollzylinder, der einen vertikalen Balken des "T" bestimmt, der in einer Richtung parallel zur Y-Achse des Luftfahrzeugs (1) orientiert ist und der in Zusammenwirkung mit dem Sockel (13, 43) die Justierverbindung zur Translationseinstellung des Flügels (4) entlang dieser Y-Achse herstellt, und
- einen Hohlzylinder, der einen horizontalen Balken des "T" bestimmt, der in einer Richtung parallel zur X-Achse des Luftfahrzeugs (1) orientiert ist und der in Zusammenwirkung mit einem Stift des Türarms (15, 45) die Justierverbindung zur Translationseinstellung des Flügels (4) entlang dieser X-Achse herstellt.

3. Luftfahrzeugtür nach einem der Ansprüche 1 bis 2, **dadurch gekennzeichnet, dass** die Einstellungsachsen (11, 12, 41, 42) auf folgende Weise orientiert sind:
- in der Richtung der X-Achse des Luftfahrzeugs (1) sind die Einstellungen der Befestigungselemente in derselben Richtung orientiert und befinden sich außerhalb der Türeinrahmung; und
- in der Richtung der Y-Achse des Luftfahrzeugs (1) sind die Einstellungsachsen in entgegengesetzten Richtungen orientiert, wobei die Achse eines oberen Befestigungselements zum Inneren der Kabine hin und jene eines unteren Befestigungselements zum Äußeren der Kabine hin orientiert ist, wobei das obere Befestigungselement eine Position aufweist, die sich oberhalb des unteren Befestigungselements entsprechend ihren Z-Koordinaten befindet.

4. Luftfahrzeugtür nach einem der Ansprüche 1 bis 3, **dadurch gekennzeichnet, dass** die Befestigungselemente (10, 40) einen Mechanismus zur Blockierung ihrer Drehung um die Y-Achse, der zwischen dem Schlitten (14, 44) und dem Sockel (13, 43) angeordnet ist, in Form einer Führungsgleitverbindung (D1, D2) aufweisen, die in der Richtung der Y-Achse orientiert ist.

5. Luftfahrzeugtür nach Anspruch 4, **dadurch gekennzeichnet, dass** die Führungsgleitverbindung (D1, D2) einen länglichen Abschnitt mit geradlinigen und parallelen Längsseiten aufweist und Bohrungen (13A, 14A, 43A, 44A) des Sockels (13, 43) und des Schlittens (14, 44) durchquert.

6. Luftfahrzeugtür nach einem der Ansprüche 1 bis 5, **dadurch gekennzeichnet, dass** die Einstellungs-Justierverbindungen durch Schraube-Mutter-Verbindungen (B1, C1, B2, C2) hergestellt sind.

7. Luftfahrzeugtür nach Anspruch 6 in Kombination mit Anspruch 2, **dadurch gekennzeichnet, dass** für die Einstellungs-Justierverbindungen auf der X-Achse des Luftfahrzeugs (B1, B2) die Schraube von einer Gewindehülse (19, 49) gebildet ist und die Mutter von dem Hohlzylinder gebildet ist, der zum Grundträger des Schlittens (14, 44) gehört, und für die Einstellungs-Justierverbindungen auf der Y-Achse des Luftfahrzeugs (C1, C2) die Schraube von einer Gewindehülse (20, 50) gebildet ist und die Mutter von einem Ring mit Innengewinde (22, 52) gebildet ist, der fest am Sockel (13, 43) befestigt ist.

8. Luftfahrzeugtür nach Anspruch 7, **dadurch gekennzeichnet, dass** die Schraube-Mutter-Verbindungen (B1, C1, B2, C2) nur über eine begrenzte Länge jeder Einstellungs-Justierachse vorhanden sind.

9. Luftfahrzeug (1), das wenigstens eine Tür nach einem der Ansprüche 1 bis 8 aufweist.

10. Verfahren zur Installation einer Luftfahrzeugtür nach einem der Ansprüche 1 bis 8 in Kombination mit den Ansprüchen 3 und 7 gleichzeitig, das eine vorangehende Phase des Türeinbaus aufweist, die allgemein in Folgendem besteht:
- Anbringen des Türarms (5) am Flügel (4);
- Anbringen jedes Befestigungselements (10, 40) des Aufhängungssystems am Rahmen (3) und am Türarm (5);
- Positionieren des Flügels (4) in Schließkonfiguration im Rahmen (3);
wobei dieses Verfahren **dadurch gekennzeichnet ist, dass** es eine Phase des Justierens der Einstellung der Tür in geschlossener Position beinhaltet, die auf die vorangehende Phase folgt, gemäß wenigstens einem der folgenden Schritte:
- zur Durchführung einer Translation der Tür in der Richtung der X-Achse des Luftfahrzeugs (1): Bewegen, im Bereich des oberen (40) und unteren (10) Befestigungselements, der Einstellungs-Gewindehülsen (19, 49), die in der X-Richtung des Luftfahrzeugs (1) orientiert sind, um eine gleiche Amplitude und in derselben Richtung;
- zur Durchführung einer Translation der Tür in der Richtung der Y-Achse des Luftfahrzeugs (1): Bewegen, im Bereich des oberen und unteren Befestigungselements, der Einstellungs-Gewindehülsen (20, 50), die in der Y-Richtung des Luftfahrzeugs (1) orientiert sind, um eine gleiche Amplitude und in derselben Richtung;
- zur Durchführung einer Drehung der Tür um eine Achse parallel zur Richtung der X-Achse des Luftfahrzeugs (1): Bewegen, im Bereich des oberen und unteren Befestigungselements, der Einstellungs-Gewindehülsen (20, 50), die in der Y-Richtung des Luftfahrzeugs (1) orientiert sind, um eine gleiche Amplitude und in entgegengesetzten Richtungen, und
- zur Durchführung einer Drehung der Tür um eine Achse parallel zur Richtung der Y-Achse des Luftfahrzeugs (1): Bewegen, im Bereich des oberen und unteren Befestigungselements, der Einstellungs-Gewindehülsen (19, 49), die in der X-Richtung des Luftfahrzeugs (1) orientiert sind, um eine gleiche Amplitude und in entgegengesetzten Richtungen.

11. Verfahren zur Installation einer Luftfahrzeugtür nach Anspruch 10, wobei ein erster Schlüssel (60A, 60C) eine Kontermutter (18, 21, 48, 51) in gelöster Position hält, während ein zweiter Schlüssel (60B, 60D) ein Drehmoment an die Gewindehülse (19, 20, 49, 50) anlegt.

12. Verfahren zur Installation einer Luftfahrzeugtür nach einem der Ansprüche 10 oder 11, wobei nach Abschluss aller Regelungsschritte ein Anzugsdrehmoment an Spannmuttern (27, 29, 57, 59) entlang der X- und Y-Achse des Luftfahrzeugs (1) angelegt wird.

## Claims

1. An aircraft door (2) which can be mounted in a fuselage in a reference frame X, Y, Z and comprising a casing (3) forming a coaming rigidly connected to the fuselage, a door leaf (4) and a door arm (5), this door arm connecting the door leaf to the casing by means of a hanging system enabling the door leaf (4) to be installed and the position thereof relative to the fuselage to be adjusted, this system comprising a pair of fasteners (10, 40) each comprising a pivot (16, 46) that is rotary about a common axis parallel to the axis Z, a base (13, 43) fastened to the casing (3), and a trolley (14, 44) that is movable on this base (13, 43) along the axis Y, the base and the trolley of each fastener forming two translational adjustment links in directions parallel to the axes X and Y to adjust the position of the door, said translation adjustment linkages forming adjustments axe, said this aircraft door (2) being **characterized in that**, for each of the fasteners (10, 40), the directions of the adjustment axes (11, 12, 41, 42) are secant in a plane parallel to the plane XY

2. The aircraft door as claimed in claim 1, in which the trolley (14, 44) of each fastener is provided with a chassis comprising two cylindrical bodies forming a "T" with:
- a solid cylinder that forms a vertical bar of the "T" oriented in a direction parallel to the axis Y of the aircraft (1) and, together with the base (13, 43), forms the translational adjustment link for the door leaf (4) along this axis Y, and
- a hollow cylinder that forms a horizontal bar of the "T" oriented in a direction parallel to the axis X of the aircraft (1) and, together with a pin of the door arm (15, 45), forms the translational adjustment link for the door leaf (4) along this axis X.

3. The aircraft door as claimed in any one of claims 1 to 2, **characterized in that** the adjustment axes (11, 12, 41, 42) are oriented as follows:
- along the axis X of the aircraft (1), the adjustment axes of the fasteners are oriented in the same direction and are outside the door coaming, and
- along the axis Y of the aircraft (1), the adjustment axes are oriented in opposite directions, with the axis of an upper fastener being oriented towards the inside of the cabin and the axis of a lower fastener being oriented towards the outside of the cabin, the upper fastener being arranged above the lower fastener along the axis Z.

4. The aircraft door as claimed in any one of claims 1 to 3, **characterized in that** the fasteners (10, 40) have a mechanism for preventing rotation about the axis Y arranged between the trolley (14, 44) and the base (13, 43), in the form of a sliding guide link (D1, D2) oriented along the axis Y.

5. The aircraft door as claimed in claim 4, **characterized in that** the sliding guide link (D1, D2) has an oblong cross-section with straight parallel longitudinal sides, and passes through bores (13A, 14A, 43A, 44A) in the base (13, 43) and the trolley (14, 44).

6. The aircraft door as claimed in any one of claims 1 to 5, **characterized in that** the adjustment links are screw-nut connections (B1, C1, B2, C2).

7. The aircraft door as claimed in claim 6 in combination with claim 2, **characterized in that** the screw for the adjustment links along the axis X of the aircraft (B1, B2) is a threaded sleeve (19, 49) and the nut is the hollow cylinder belonging to the chassis of the trolley (14, 44), and the screw for the adjustment links along the axis Y of the aircraft (C1, C2) is a threaded sleeve (20, 50) and the nut is a threaded ring (22, 52) rigidly connected to the base (13, 43).

8. The aircraft door as claimed in claim 7, **characterized in that** the screw-nut connections (B1, C1, B2, C2) are only provided over a limited length of each adjustment axis.

9. An aircraft (1) comprising at least one door as claimed in one of claims 1 to 8.

10. A method for installing an aircraft door as claimed in one of claims 1 to 8 in combination with claims 3 and 7 taken together, comprising a preliminary door positioning phase that involves:
- joining the door arm (5) to the door leaf (4),
- connecting each fastener (10, 40) of the hanging system to the casing (3) and to the door arm (5),
- positioning the door leaf (4) in the casing (3) in the closed position,
this method being **characterized in that** it comprises an adjustment phase for the door in the closed position that follows the preliminary phase according to at least one of the following steps:
- to move the door in translation along the axis X of the aircraft (1): in the upper fastener (40) and the lower fastener (10), move the threaded adjustment sleeves (19, 49) oriented in the direction X of the aircraft (1) by the same amount and in the same direction,
- to move the door in translation along the axis Y of the aircraft (1): in the upper fastener and the lower fastener, move the threaded adjustment sleeves (20, 50) oriented in the direction Y of the aircraft (1) by the same amount and in the same direction,
- to rotate the door about an axis parallel to the axis X of the aircraft (1): in the upper fastener and the lower fastener, move the threaded adjustment sleeves (20, 50) oriented in the direction Y of the aircraft (1) by the same amount and in opposite directions, and
- to rotate the door about an axis parallel to the axis Y of the aircraft (1): in the upper fastener and the lower fastener, move the threaded adjustment sleeves (19, 49) oriented in the direction X of the aircraft (1) by the same amount and in opposite directions.

11. The aircraft door installation method as claimed in claim 10, in which a first spanner (60A, 60C) holds a locknut (18, 21, 48, 51) in an unlocked position while a second spanner (60B, 60D) applies torque to the threaded sleeve (19, 20, 49, 50).

12. The aircraft door installation method as claimed in either one of claims 10 or 11, in which a tightening torque is applied to the clamping nuts (27, 29, 57, 59) along the axes X and Y of the aircraft (1) once all of the adjustment steps have been completed.
